# DEMANDE DE BREVET EUROPEEN

(11) **EP 1 023 829 A1**
(43) Date de publication de la demande: **02.08.2000**
(21) Numéro de dépôt: 00420016.8
(22) Date de dépôt: 24.01.2000
(51) Int. Cl.: A01K 89/027

(54) **Moulinet de pêche à embrayage automatique de bobine**

(30) Priorité: 27.01.1999 FR 9901272
(71) Demandeur: Mitchell Sports, 74970 Marignier (FR)
(72) Inventeur: Bernard, Jean, 74950 Scionzier (FR); Platel, Frédéric, 74970 Marignier (FR)
(74) Mandataire: Poncet, Jean-François

(57) **Abrégé**

Selon l'invention, une bobine (6) est retenue sur un arbre support de bobine (7) par des moyens élastiques de retenue (18) engagés soit dans une première gorge annulaire (16) soit dans une seconde gorge annulaire (17). La bobine (6) comporte des excroissances radiales de bobine (24), escamotables radialement en étant rappelées vers le centre par des moyens élastiques de rappel. L'arbre support de bobine (7) comporte des excroissances radiales d'arbre (22) sous forme de cannelures longitudinales. Lors du recul de l'arbre support de bobine (7), la bobine (6) est repoussée vers l'avant par une partie antérieure (21) du tambour (11) de récupérateur de fil, et les excroissances radiales d'arbre (22) repoussent radialement les excroissances radiales de bobine (24) puis viennent s'engager entre elles pour embrayer la bobine (6) en rotation sur l'arbre support de bobine (7). On assure ainsi un embrayage automatique fiable de la bobine (6) sur l'arbre support de bobine (7).

## Description

La présente invention concerne les moulinets pour canne à pêche, du type à bobine fixe et récupérateur rotatif de fil. L'invention s'applique plus spécialement à de tels moulinets dont la réserve de fil, appelée "bobine", est une pièce sensiblement de révolution constituée de deux flasques étendus radialement et réunis par un moyeu cylindrique s'étendant axialement d'un flasque à l'autre. Cette bobine est adaptée de manière amovible à l'extrémité antérieure d'un arbre support de bobine monté lui-même rotatif dans le boîtier de moulinet et sollicité par un frein arrière. Le moulinet comprend un boîtier de moulinet, avec un mécanisme d'entraînement en rotation pour entraîner le récupérateur de fil ou "tambour" autour de l'arbre support de bobine, et un mécanisme d'entraînement en translation axiale pour entraîner en translation axiale alternative l'arbre support de bobine. Les mécanismes d'entraînement sont sollicités par une manivelle accessible par l'utilisateur.

Lors de la pêche au lancer, pour l'étape de récupération du fil le récupérateur de fil enroule le fil sur la bobine. On peut limiter la tension du fil et la régler par un réglage du frein arrière qui commande le couple résistant entre l'arbre support de bobine et le boîtier du moulinet. Lorsque le fil est tiré selon une tension supérieure à une valeur déterminée, le frein arrière autorise la rotation de l'arbre support de bobine et de la bobine en opposant une résistance fonction du serrage du frein.

Lors de la pêche au poser, on pose la canne sur un support, et on doit autoriser le dévidement libre de fil lorsque le poisson a mordu. Dans ces conditions, avec un moulinet à frein arrière dans lequel la bobine n'est pas débrayable sur l'arbre support de bobine, on doit régler le couple de freinage de frein arrière à son minimum, pour que le maintien du fil soit juste suffisant pour résister au courant de la rivière ou au vent. Mais il est alors peu commode et peu rapide de régler à nouveau le couple de freinage du frein arrière avant le ferrage, car cela nécessite une manoeuvre longue et contraignante du frein arrière.

Pour permettre d'utiliser un tel moulinet à frein arrière tant pour la pêche au lancer que pour la pêche au poser, on a proposé, dans le document FR 2 650 732 A, d'assurer un réaccouplement automatique de la bobine sur son arbre support de bobine, produisant la solidarisation en rotation de la bobine sur son arbre dès que le pêcheur reprend en main le moulinet pour récupérer le fil en actionnant sa manivelle.

Pour cela, dans ce document antérieur, l'arbre support de bobine comprend une première et une seconde gorges annulaires ménagées au voisinage de l'extrémité antérieure de l'arbre et écartées l'une de l'autre selon un décalage axial ; un élément élastique de retenue solidaire de la bobine vient s'engager dans l'une ou l'autre des gorges annulaires, pour maintenir la bobine sur l'arbre support de bobine selon une première position axiale lorsque l'élément élastique de retenue est engagé dans la première gorge annulaire, et pour maintenir la bobine sur l'arbre support de bobine selon une seconde position axiale décalée axialement de la première position axiale lorsque l'élément élastique de retenue est engagé dans la seconde gorge annulaire ; l'arbre support de bobine comprend une clavette transversale qui, dans la première position axiale de la bobine, s'engage dans un passage transversal ménagé dans la bobine pour la solidariser en rotation sur l'arbre support de bobine ; ladite clavette échappe au passage et peut librement tourner dans la bobine pour la libérer lorsque celle-ci est dans la seconde position axiale ; des moyens de réaccouplement automatique produisent le déplacement axial automatique de la bobine de sa seconde position axiale jusqu'à sa première position axiale par l'actionnement de la manivelle du moulinet.

La structure décrite dans ce document présente un inconvénient important : dans certains cas, le mécanisme d'entraînement en rotation du moulinet se bloque, rendant impossible non seulement le réaccouplement automatique de la bobine, mais également la rotation du récupérateur de fil et de la manivelle. Le blocage se produit lorsque, en position débrayée de la bobine, la clavette transversale solidaire de l'arbre n'est pas positionnée face au passage transversal correspondant de la bobine. La clavette transversale forme alors une butée qui empêche le coulissement de la bobine vers l'avant sur l'arbre, et le mécanisme d'entraînement du moulinet est alors bloqué.

Dans le document DE 40 04 244 A, le déverrouillage de la bobine nécessite la manoeuvre d'un poussoir frontal, puis le verrouillage de la bobine est assuré par des ergots qui coulissent dans la direction longitudinale de l'axe. La structure est plus complexe et moins commode d'utilisation.

Le problème proposé par la présente invention est, dans une structure à deux positions axiales de bobine, de permettre le désaccouplement aisé de la bobine par simple poussée axiale manuelle de la bobine sur son arbre, puis de permettre le réaccouplement fiable et automatique de la bobine sur l'arbre dès que le pêcheur veut reprendre en main le moulinet par actionnement de la manivelle, sans risque de blocage du mécanisme d'entraînement en rotation du moulinet.

Ainsi, selon l'invention, on assure un réaccouplement automatique fiable de la bobine sur son arbre support de bobine, produisant la solidarisation en rotation de la bobine sur son arbre, dès que le pêcheur reprend en main le moulinet pour récupérer le fil en actionnant sa manivelle, sans nécessiter un effort important sur la manivelle.

Pour atteindre ces objets ainsi que d'autres, le moulinet selon l'invention comprend :
- un boîtier de moulinet, avec un mécanisme d'entraînement en rotation de tambour et un mécanisme d'entraînement en translation axiale alternative d'arbre sollicités par une manivelle,
- un arbre support de bobine, monté rotatif dans le boîtier du moulinet et freiné en rotation par un frein arrière, et entraîné en translation axiale alternative dans le boîtier de moulinet par le mécanisme d'entraînement en translation axiale alternative d'arbre,
- une bobine adaptée de manière amovible à l'extrémité antérieure de l'arbre support de bobine,
- un tambour de récupération de fil, sollicité en rotation par le mécanisme d'entraînement en rotation de tambour,
- des moyens de retenue axiale sélective pour retenir la bobine sur l'arbre support de bobine sélectivement selon une première position axiale ou une seconde position axiale décalée axialement de la première position axiale tout en autorisant le déplacement de la bobine d'une position axiale à l'autre sous l'action d'un effort de poussée axiale d'intensité supérieure à un seuil de retenue déterminé,
- des moyens de réaccouplement automatique produisant le déplacement axial automatique de la bobine de sa seconde position axiale jusqu'à sa première position axiale par l'actionnement de la manivelle,
- au moins une excroissance radiale de bobine et une excroissance radiale d'arbre, agencées pour s'engager latéralement l'une contre l'autre en solidarisant ainsi la bobine en rotation sur l'arbre support de bobine lorsque celle-ci est en première position axiale tout en autorisant sa translation axiale, et agencées pour se dégager l'une de l'autre et libérer ainsi la rotation de la bobine sur l'arbre support de bobine lorsque celle-ci est en seconde position axiale ;

selon l'invention :
- l'une au moins des excroissances radiales de bobine ou d'arbre est escamotable radialement à l'encontre de moyens élastiques de rappel,
- des rampes obliques sont prévues sur les faces frontales respectives en regard l'une de l'autre des excroissances radiales d'arbre et/ou de bobine,
de sorte que, lors du déplacement relatif de la bobine sur l'arbre support de bobine depuis la seconde position axiale vers la première position axiale, les excroissances radiales ne s'opposent pas au déplacement axial de la bobine et s'escamotent radialement si nécessaire pour revenir ensuite s'engager latéralement les unes contre les autres en première position axiale de bobine.

Selon un mode de réalisation particulier, les excroissances radiales de bobine sont escamotables radialement vers l'extérieur à l'encontre des moyens élastiques de rappel.

Dans ce cas, on peut prévoir que l'arbre support de bobine porte un tronçon à cannelures longitudinales constituant les excroissances radiales d'arbre.

Selon une réalisation avantageuse, le tronçon à cannelures longitudinales est un manchon chassé en force sur l'arbre support de bobine.

Selon un mode de réalisation avantageux, la bobine comprend une paroi postérieure rapportée munie d'un passage axial dans lequel dépassent les excroissances radiales de bobine, et le tronçon à cannelures longitudinales de l'arbre support de bobine est conformé pour tourillonner librement dans le passage axial tout en venant engrener sur les excroissances radiales de bobine lorsqu'elles ne sont pas escamotées, la paroi postérieure étant suivie vers l'avant d'un espace dépourvu d'excroissances radiales de bobine et dans lequel le tronçon à cannelures longitudinales peut tourner librement.

Selon une première possibilité, les excroissances radiales de bobine sont des ergots de coulisseaux montés coulissant radialement et guidés en translation radiale dans la bobine en étant sollicités vers le centre par des moyens élastiques de rappel.

Selon une autre possibilité, les excroissances radiales de bobine sont des extrémités de leviers montés pivotants, comportant une extrémité en forme d'ergot dépassant radialement vers l'arbre support de bobine, et sollicités par des moyens élastiques de rappel.

D'autres objets, caractéristiques et avantages de la présente invention ressortiront de la description suivante de modes de réalisation particuliers, faite en relation avec les figures jointes, parmi lesquelles:
- la figure 1 est une vue de côté, en coupe partielle, illustrant une structure de moulinet de pêche selon un mode de réalisation de la présente invention ;
- la figure 2 est une vue de côté partielle en coupe longitudinale de la partie antérieure du moulinet de la figure 1, en position de bobine débrayée ;
- la figure 3 est une vue de côté en coupe longitudinale de la partie antérieure du moulinet, en position de bobine embrayée ; - la figure 4 est une vue en perspective d'un arbre support de bobine selon un mode de réalisation de l'invention ;

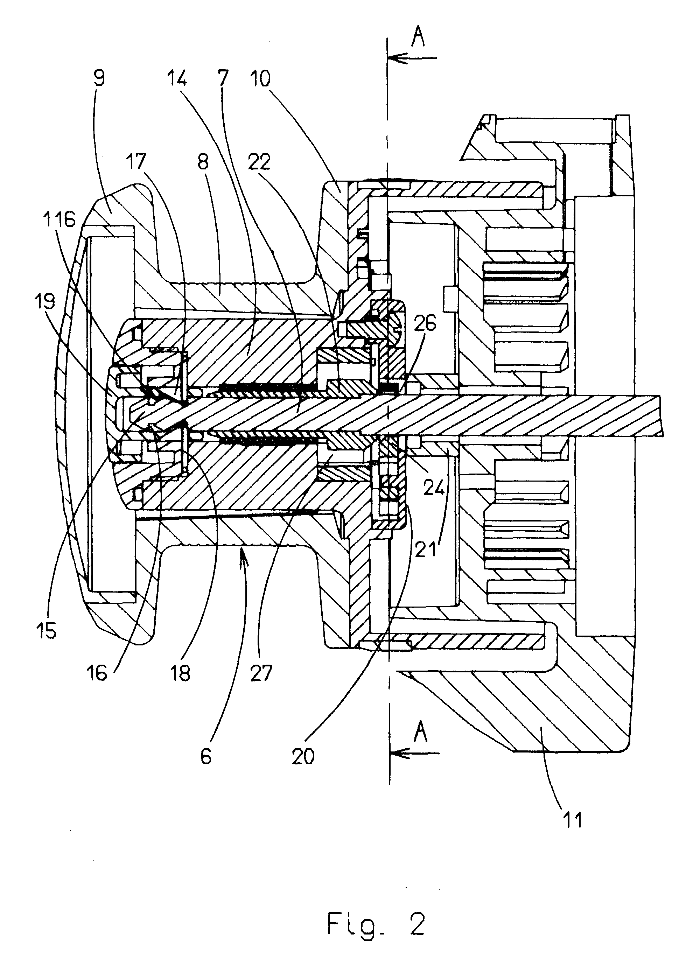

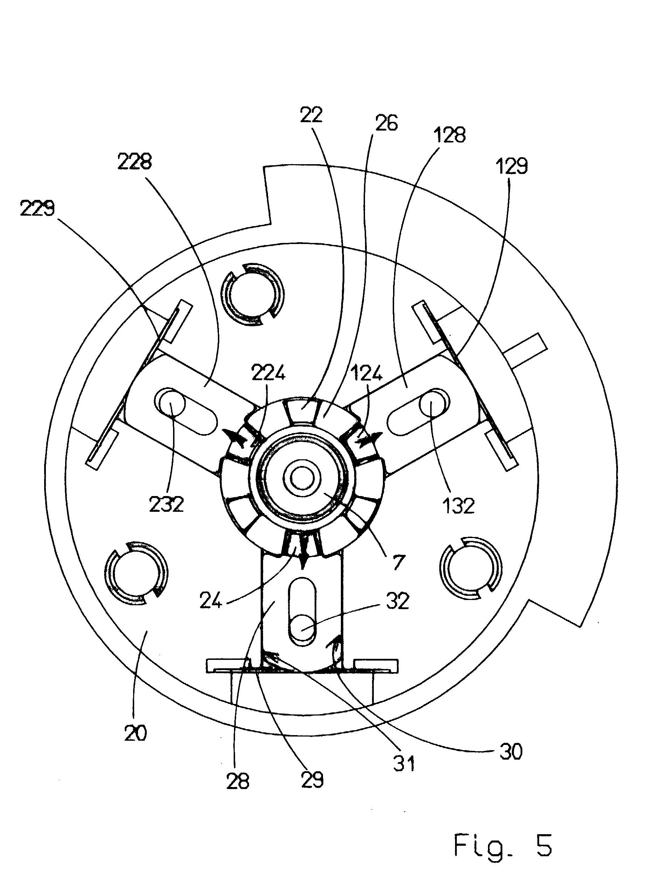

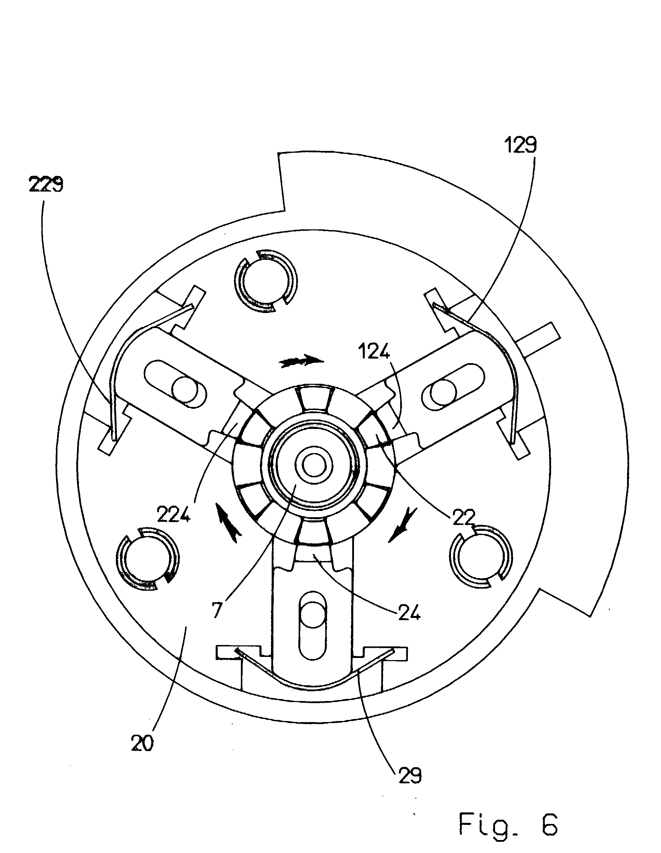

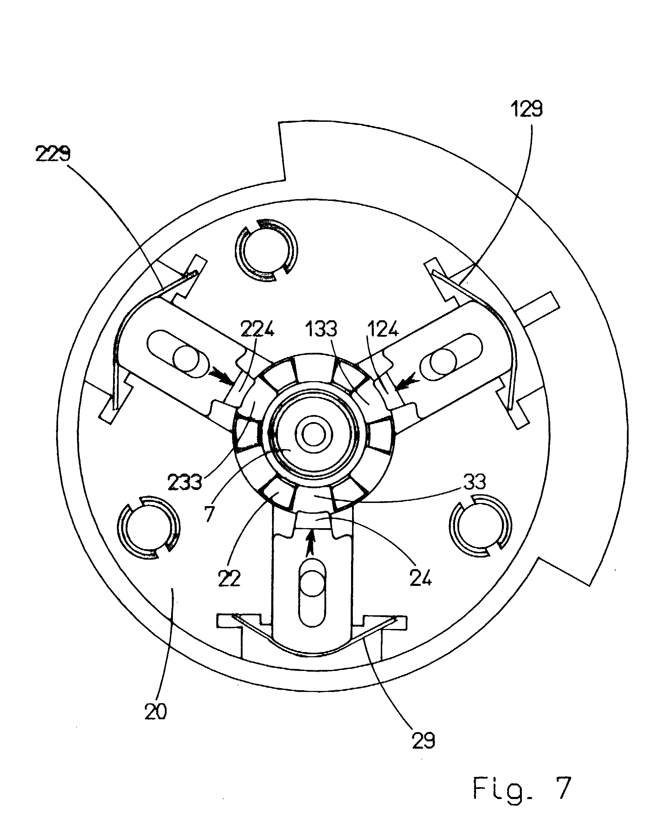

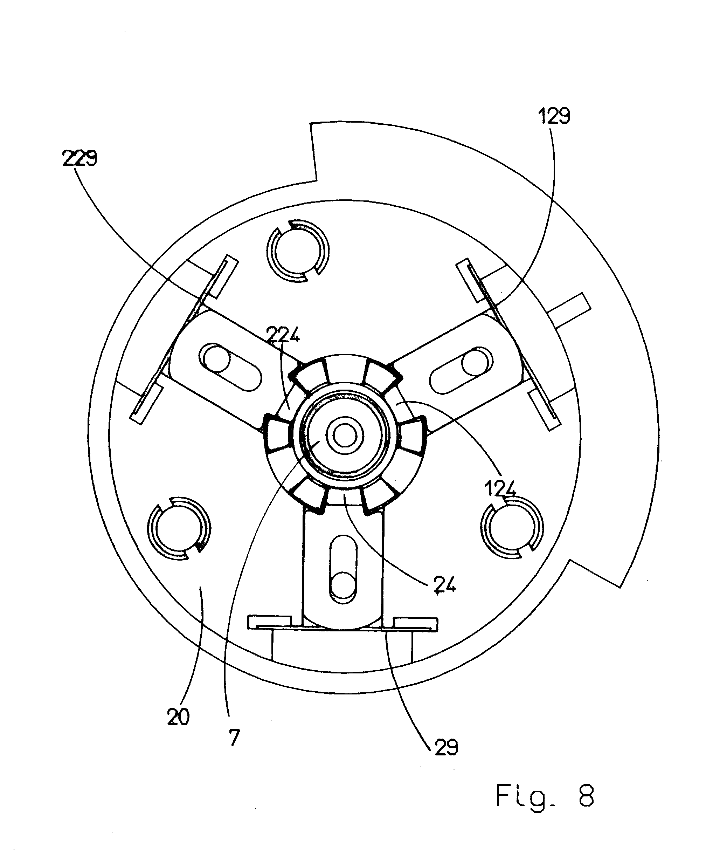

- les figures 5 à 8 sont des vues partielles en coupe transversale selon le plan A-A de la figure 2, illustrant les étapes successives du réaccouplement selon l'invention : la figure 5 illustre l'état du dispositif au début de la translation de la bobine vers l'avant, dans le cas où les excroissances radiales de bobine sont en alignement avec les excroissances radiales d'arbre ; la figure 6 illustre l'état du dispositif après translation de la bobine, les excroissances radiales de bobine étant escamotées ; la figure 7 illustre l'état du dispositif après rotation relative de la bobine par rapport à l'arbre ; 1 et la figure 8 illustre l'état du dispositif après réaccouplement.

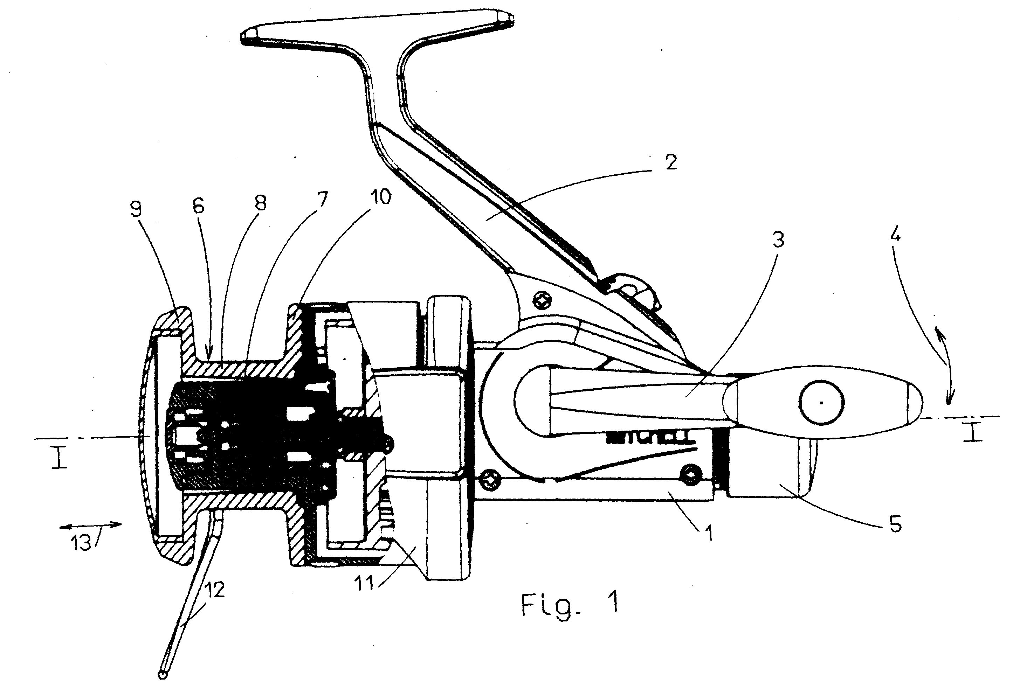

La figure 1 représente un moulinet de pêche selon un mode de réalisation de la présente invention, illustré en vue de côté dans laquelle on a effectué une coupe longitudinale de la partie antérieure de moulinet.

Un tel moulinet comprend un boîtier de moulinet 1, généralement orienté selon un axe longitudinal I-I, et comportant un pied 2 adapté pour sa fixation à une canne à pêche elle-même orientée longitudinalement parallèlement à l'axe longitudinal I-I. Une manivelle 3 est montée rotative sur le boîtier de moulinet 1 selon un axe transversal, et peut être sollicitée en rotation par l'utilisateur comme illustré par la flèche 4. Un frein arrière 5, dont on distingue le bouton d'actionnement, est prévu dans le boîtier de moulinet 1 pour être accessible par l'utilisateur depuis l'arrière du moulinet.

En partie antérieure du moulinet, on distingue une bobine 6, adaptée de manière amovible à l'extrémité antérieure d'un arbre support de bobine 7 tenu dans le boîtier de moulinet 1 et dépassant vers l'avant en étant orienté selon l'axe longitudinal I-I. La bobine 6 comprend un moyeu cylindrique 8 reliant un flasque antérieur 9 et un flasque postérieur 10 pour constituer une gorge dans laquelle peut être enroulée le fil de pêche.

Un tambour 11 de récupération de fil est monté rotatif sur le boîtier de moulinet 1 selon l'axe longitudinal I-I, disposé entre le boîtier de moulinet 1 et la bobine 6. Le tambour 11 porte un arceau 12 de récupération de fil, qui peut guider le fil de pêche pour l'enrouler sur la bobine 6 lors de la rotation du tambour 11.

Le boîtier de moulinet 1 contient un mécanisme d'entraînement en rotation du tambour 11 et un mécanisme d'entraînement en translation axiale alternative de l'arbre support de bobine 7. Ces deux mécanismes, non visibles sur la figure 1, sont des mécanismes bien connus de l'homme du métier, par exemple tels qu'utilisés dans tous les moulinets de pêche à bobine fixe et récupérateur rotatif de fil, de sorte qu'ils ne seront pas décrits de façon plus précise. Les mécanismes d'entraînement sont sollicités par la manivelle 3.

L'arbre support de bobine 7 est monté rotatif dans le boîtier de moulinet 1 selon l'axe longitudinal I-I, et freiné en rotation par le frein arrière 5. Il est simultanément entraîné en translation axiale alternative par le mécanisme d'entraînement en translation axiale d'arbre, comme illustré par la flèche 13, par la rotation de la manivelle 3.

Dans le mode de réalisation illustré sur les figures 1 à 3, la bobine 6 est formée de façon générale d'une réserve extérieure de fil comportant le moyeu cylindrique 8 et les deux flasques 9 et 10, rapportée sur un noyau central 14 lui-même monté sur l'arbre support de bobine 7.

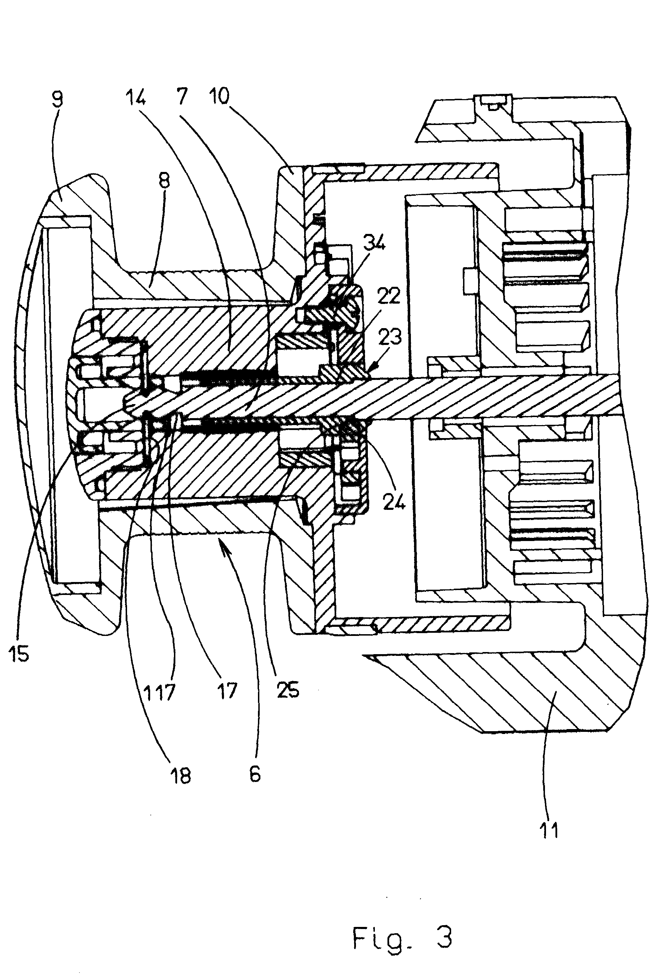

La bobine 6 est retenue sur l'arbre support de bobine 7 par des moyens de retenue axiale sélective qui permettent de la tenir sélectivement selon une première position axiale illustrée sur la figure 3 ou une seconde position axiale illustrée sur la figure 2, les deux positions axiales étant décalées axialement l'une de l'autre le long de l'arbre support de bobine 7.

Pour cela, dans le mode de réalisation mieux visible sur les figures 2 à 4, l'arbre support de bobine 7 comprend, au voisinage de son extrémité antérieure 15, une première gorge annulaire 16 et une seconde gorge annulaire 17 écartées l'une de l'autre selon un décalage axial.

La bobine 6 comprend un élément élastique de retenue 18 ou clavette élastique, adapté pour se développer radialement vers l'intérieur et venir s'engager dans l'une ou l'autre des gorges annulaires 16 ou 17 pour maintenir la bobine 6 sur l'arbre support de bobine 7. Ainsi, l'élément élastique de retenue 18 retient la bobine dans la première position axiale lorsque l'élément élastique de retenue 18 est engagé dans la première gorge annulaire 16 (figure 3), et maintient la bobine 6 selon la seconde position axiale lorsque l'élément élastique de retenue 18 est engagé dans la seconde gorge annulaire 17 (figure 2).

Un poussoir axial 19, accessible depuis l'avant de la bobine 6, est monté mobile en translation axiale sur le corps de bobine 6, et comporte une extrémité postérieure conique susceptible de s'engager entre des branches de l'élément élastique de retenue 18 lorsque le poussoir axial 19 est repoussé vers l'arrière, écartant lesdites branches et provoquant leur désengagement de la première gorge annulaire 16 de l'arbre support de bobine 7. La bobine 6 peut alors être retirée librement de l'arbre support de bobine 7 par translation axiale vers l'avant.

Dans le mode de réalisation avantageux illustré sur les figures, la première gorge annulaire 16 qui assure le maintien de la bobine 6 en première position axiale est proche de l'extrémité antérieure 15 de l'arbre support de bobine 7, tandis que la seconde gorge annulaire 17 est plus éloignée de l'extrémité antérieure 15 de l'arbre support de bobine 7.

Comme illustré sur les figures 2 et 3, la première gorge annulaire 16 comporte une paroi antérieure abrupte, sensiblement perpendiculaire à l'axe longitudinal I-I de l'arbre support de bobine 7, de sorte qu'une traction de la bobine 6 vers l'avant ne permet pas le désengagement de la bobine 6 hors de son arbre support de bobine 7. Par contre, la première gorge annulaire 16 comporte une paroi postérieure inclinée, de sorte qu'une poussée de la bobine 6 vers l'arrière permet sa translation, à l'encontre de l'élément élastique de retenue 18, vers l'arrière du moulinet jusqu'à la seconde position axiale illustrée sur la figure 2.

La seconde gorge annulaire 17 comporte une paroi postérieure abrupte, sensiblement perpendiculaire à l'axe longitudinal I-I, pour interdire toute translation de la bobine 6 vers l'arrière au-delà de la seconde position axiale illustrée sur la figure 2. Par contre, la seconde gorge annulaire 17 comporte une paroi antérieure inclinée, autorisant la translation de la bobine 6 vers l'avant sous l'action d'une force de déplacement, à l'encontre de l'élément élastique de retenue 18, pour retourner en première position axiale illustrée sur la figure 3. L'élément élastique de retenue 18 détermine un seuil de retenue de la bobine en première position axiale ou en seconde position axiale, et constitue un moyen de retenue axiale sélective autorisant le déplacement de la bobine 6 d'une position axiale à l'autre sous l'action d'un effort de poussée axiale d'intensité supérieure au seuil de retenue déterminé.

Lorsque la bobine 6 est en première position axiale, comme illustré sur la figure 3, la bobine 6 peut se déplacer en translation axiale alternative librement entre deux positions extrêmes, sans venir buter contre le tambour 11.

Par contre, lorsque la bobine 6 est en seconde position axiale comme illustré sur la figure 2, lors du mouvement de translation axiale alternative de la bobine 6 vers l'arrière du moulinet, la bobine 6 vient buter par sa paroi postérieure 20 contre une partie antérieure 21 du tambour 11. Ainsi, la partie antérieure 21 du tambour 11 de récupération de fil forme butée limitant la course de translation de la bobine 6 vers l'arrière. De la sorte, la bobine 6 subit une poussée axiale vers l'avant, qui produit son déplacement axial automatique sur l'arbre support de bobine 7 depuis sa seconde position axiale jusqu'à sa première position axiale par l'actionnement de la manivelle 3. Comme on le comprendra plus loin, ce mouvement assure le réaccouplement automatique de la bobine 6 sur l'arbre support de bobine 7.

Selon l'invention, la bobine 6 et l'arbre support de bobine 7 sont en outre munis de moyens d'engagement réciproque pour assurer la solidarisation en rotation de la bobine 6 sur l'arbre support de bobine 7 lorsque la bobine 6 est en seconde position axiale illustrée sur la figure 3, et pour libérer la bobine 6 en rotation sur l'arbre support de bobine 7 lorsque la bobine 6 est en seconde position axiale illustrée sur la figure 2.

Pour cela, la bobine 6 comprend des excroissances radiales de bobine dirigées vers l'intérieur, et l'arbre support de bobine 7 comprend des excroissances radiales d'arbre dirigées vers l'extérieur.

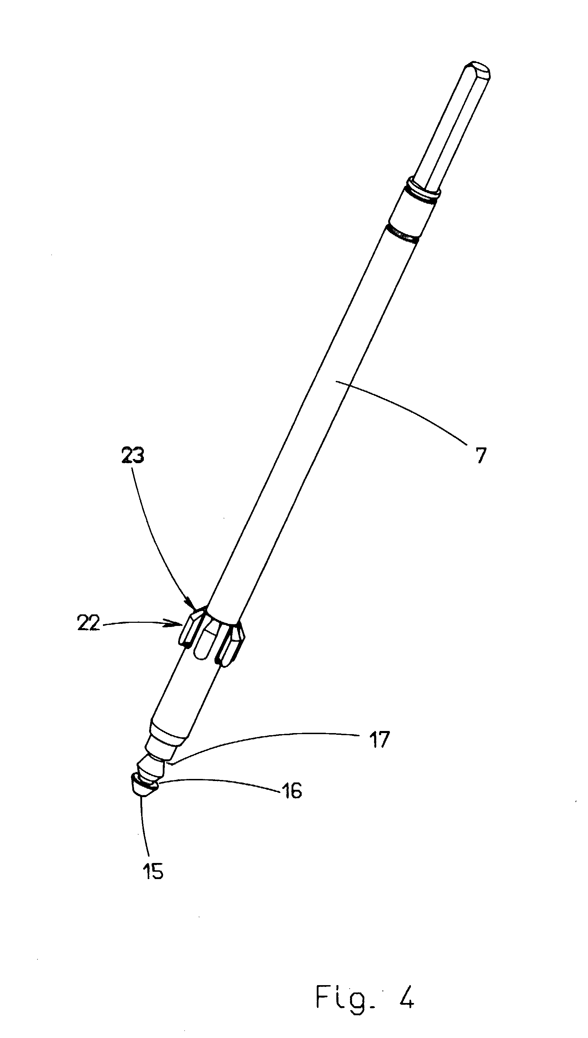

Sur la figure 4, on distingue les excroissances radiales d'arbre 22, qui, dans ce mode de réalisation, forment un tronçon à cannelures longitudinales ayant une rampe oblique sur leur face frontale postérieure 23.

La bobine 6 comporte au moins une excroissance radiale de bobine 24 agencée pour s'engager latéralement dans les cannelures 22 lorsque la bobine 6 est en première position axiale illustrée sur la figure 3. De préférence, l'excroissance radiale de bobine 24 comprend une rampe oblique sur sa face frontale antérieure 25, pour coopérer avec la face frontale postérieure 23 des cannelures lors du passage de la bobine 6 de la seconde position axiale vers la première position axiale.

Dans le mode de réalisation illustré sur les figures, l'excroissance radiale de bobine 24 est escamotable radialement à l'encontre de moyens élastiques de rappel. De la sorte, lors du déplacement de la bobine sur l'arbre support de bobine 7 depuis la seconde position axiale (figure 2) vers la première position axiale (figure 3), sous l'action d'une poussée de la partie antérieure 21 du tambour 11, les excroissances radiales 22 et 24 ne s'opposent pas au déplacement axial de la bobine 6 et peuvent s'escamoter radialement si nécessaire pour revenir ensuite s'engager latéralement les unes contre les autres en première position axiale de bobine pour solidariser la bobine 6 en rotation sur l'arbre support de bobine 7.

En pratique, comme illustré sur les figures 2 et 3, la bobine 6 comprend une paroi postérieure 20 rapportée, munie d'un passage axial 26 dans lequel dépassent les excroissances radiales de bobine 24, et le tronçon à cannelures longitudinales 22 de l'arbre support de bobine 7 est conformé pour tourillonner librement dans le passage axial 26 tout en venant engrener sur les excroissances radiales de bobine 24 lorsqu'elles ne sont pas escamotées. La paroi postérieure 20 est suivie, vers l'avant, d'un espace 27 dépourvu d'excroissances radiales de bobine et dans lequel le tronçon à cannelures longitudinales 22 peut tourner librement. En première position axiale de bobine (figure 3), le tronçon à cannelures longitudinales 22 se trouve engagé dans le passage axial 26 et engrène sur les excroissances radiales de bobine 24. Par contre, en deuxième position axiale illustrée sur la figure 2, le tronçon à cannelures longitudinales 22 se trouve à l'intérieur de l'espace 27, à l'écart des excroissances radiales de bobine 24.

Selon un mode de réalisation pouvant présenter des avantages dans la construction, le tronçon à cannelures longitudinales 22, peut être un manchon chassé en force sur l'arbre support de bobine 7.

Dans la réalisation illustrée sur les figures 5 à 8, les excroissances radiales de bobine comprennent trois excroissances radiales de bobine 24, 124 et 224, réparties régulièrement autour de l'arbre support de bobine 7, et constituées par des ergots de coulisseaux respectifs 28, 128 et 228 montés coulissants radialement et guidés en translation radiale dans la paroi postérieure 20 de bobine en étant sollicités vers le centre par des moyens élastiques de rappel tels que des lames ressorts 29, 129 et 229. Les coulisseaux 28, 128 et 228 coulissent dans des logements radiaux limités vers l'avant et vers l'arrière par des parois de retenue dans la paroi postérieure 20 de bobine, et limités latéralement par des faces de guidage latérales telles que les faces 30 et 31 illustrées sur la figure 5.

En outre, dans le mode de réalisation illustré, les coulisseaux 28, 128 et 228 comportent une lumière oblongue dans laquelle coulisse un pion 32, 132 ou 232 fixe limitant leurs mouvements.

Pour passer de la première position axiale à la seconde position axiale, il suffit que l'utilisateur repousse la bobine 6 vers l'arrière : les excroissances radiales respectives 22 et 24 coulissent les unes dans les autres sans s'opposer au mouvement de translation de la bobine 6.

Par contre, pour passer de la seconde position axiale illustrée sur la figure 2 à la première position axiale illustrée sur la figure 3, lorsque la partie postérieure 21 du tambour 11 forme butée limitant le mouvement vers l'arrière de la bobine 6 pendant le recul de l'arbre support de bobine 7, le recul de l'arbre support de bobine 7 risquerait d'être bloqué si les faces antérieures 25 des excroissances radiales de bobine 24 venaient buter contre les faces frontales postérieures 23 des excroissances radiales 22 de l'arbre support de bobine 7. Selon l'invention, grâce à la présence des faces frontales inclinées respectives 25 et 23, et grâce à la possibilité d'escamotage radial des excroissances radiales de bobine 24, le recul de l'arbre support de bobine 7 n'est pas bloqué lorsque la bobine 6 vient en appui par sa paroi postérieure 20 contre la partie antérieure 21 du tambour 11 : le mouvement des organes est expliqué en relation avec les figures 5 à 8.

Sur la figure 5, le dispositif est dans la seconde position axiale de la figure 2 : les excroissances radiales telles que la cannelure 22 de l'arbre support de bobine 7 sont en avant des excroissances radiales 24, 124 et 224 de la paroi postérieure 20 de bobine ; en début de mouvement d'avance relative de la bobine 6 sur l'arbre support de bobine 7, les excroissances radiales 22 de l'arbre support de bobine 7 viennent en appui par leur face frontale postérieure inclinée 23 sur la face frontale antérieure inclinée 25 des excroissances radiales de bobine 24, 124 et 224 ; par glissement relatif des faces frontales inclinées 25 et 23, les excroissances radiales de bobine 24, 124 et 224 sont repoussées radialement vers l'extérieur comme illustré par les flèches correspondantes sur la figure 5, à l'encontre des lames ressorts 29, 129 et 229.

Sur la figure 6, les excroissances radiales de bobine 24, 124 et 224 ont été escamotées radialement vers l'extérieur, de sorte qu'elles échappent aux excroissances radiales 22 de l'arbre support de bobine 7. La bobine peut alors pivoter légèrement par rapport à l'arbre support de bobine 7, comme illustré par les flèches périphériques sur la figure 6 jusqu'à atteindre la position illustrée sur la figure 7 dans laquelle les excroissances radiales de bobine 24, 124 et 224 se trouvent face à une rainure correspondante 33, 133 ou 233 du tronçon à cannelures longitudinales 22 de l'arbre support de bobine 7. Sous l'action des lames ressorts 29, 129 et 229, les excroissances radiales de bobine 24, 124 et 224 sont alors repoussées radialement vers l'intérieur comme illustré par les flèches radiales sur la figure 7, pour venir s'engager dans les rainures respectives 33, 133 et 233, bloquant ainsi la rotation de la bobine sur l'arbre support de bobine 7. La bobine est alors verrouillée sur l'arbre support de bobine, la position de verrouillage étant illustrée sur la figure 8.

Dans le mode de réalisation illustré sur les figures 2 à 8, la paroi postérieure 20 de la bobine 6 est une paroi rapportée, retenue sur le noyau central 14 par des vis telles que la vis 34.

Dans un mode de réalisation différent, également possible selon l'invention, on peut prévoir que les excroissances radiales de bobine sont des leviers montés pivotants, mais comportant une extrémité en forme d'ergot dépassant radialement vers l'arbre support de bobine 7. Les leviers peuvent être sollicités par des moyens élastiques de rappel.

En alternative, on pourrait prévoir que les excroissances radiales escamotables sont ménagées sur l'arbre support de bobine 7, au lieu d'être prévues sur la bobine 6.

De préférence, selon l'invention, la seconde gorge annulaire 17 comporte une rampe 117 en direction de la première gorge annulaire 16, pour autoriser la translation de la bobine 6 en direction de la première gorge annulaire 16 sous l'action d'un effort axial sollicitant la bobine 6 à l'encontre de la force de retenue produite par l'élément élastique de retenue 18.

Une butée fixe en translation axiale par rapport au boîtier de moulinet 1, par exemple la partie antérieure 21 du tambour 11, autorise le déplacement axial de la bobine 6 par rapport au corps de moulinet 1 selon toute la course axiale de l'arbre support de bobine 7 lorsque la bobine 6 est en première position axiale, mais s'oppose au déplacement axial de la bobine 6 par rapport au boîtier de moulinet 1 sur une portion postérieure de la course axiale de l'arbre support de bobine 7 lorsque la bobine 6 est en seconde position axiale. De la sorte, lors du mouvement de recul de l'arbre support de bobine 7, dans ladite portion postérieure de course axiale de l'arbre support de bobine 7, la bobine 6 est retenue par la partie antérieure 21 de tambour 11 ; l'élément élastique de retenue 18 échappe de la seconde gorge annulaire 17 et la bobine 6 coulisse sur l'arbre support de bobine 7 depuis sa seconde position axiale jusqu'à sa première position axiale (figure 3) ; l'élément élastique de retenue 18 s'insère alors dans la première gorge annulaire 16 pour retenir la bobine 6 en première position axiale sur l'arbre support de bobine 7 ; on assure ainsi un réaccouplement automatique.

De préférence, la première gorge annulaire 16 comporte une rampe 116 en direction de la seconde gorge annulaire 17, de sorte que, en fin du mouvement de réaccouplement, la bobine 6 échappe à la butée fixe constituée par la partie antérieure 21 du tambour 11 sous l'action de l'élément élastique de retenue 18, et de sorte que l'utilisateur peut ramener la bobine 6 en seconde position axiale par simple poussée axiale de la bobine 6 vers l'arrière.

La présente invention n'est pas limitée aux modes de réalisation qui ont été explicitement décrits, mais elle en inclut les diverses variantes et généralisations contenues dans le domaine des revendications ci-après.

## Revendications

1. Moulinet de pêche comportant :
- un boîtier de moulinet (1), avec un mécanisme d'entraînement en rotation de tambour et un mécanisme d'entraînement en translation axiale alternative d'arbre sollicités par une manivelle (3), - un arbre support de bobine (7), monté rotatif dans le boîtier du moulinet (1) et freiné en rotation par un frein arrière (5), et entraîné en translation axiale alternative (13) dans le boîtier de moulinet (1) par le mécanisme d'entraînement en translation axiale alternative d'arbre,
- une bobine (6) adaptée de manière amovible à l'extrémité antérieure (15) de l'arbre support de bobine (7),
- un tambour (11) de récupération de fil, sollicité en rotation par le mécanisme d'entraînement en rotation de tambour,
- des moyens de retenue axiale sélective (16, 17, 18) pour retenir la bobine (6) sur l'arbre support de bobine (7) sélectivement selon une première position axiale ou une seconde position axiale décalée axialement de la première position axiale tout en autorisant le déplacement de la bobine (6) d'une position axiale à l'autre sous l'action d'un effort de poussée axiale d'intensité supérieure à un seuil de retenue déterminé,
- des moyens de réaccouplement automatique (21) produisant le déplacement axial automatique de la bobine (6) de sa seconde position axiale jusqu'à sa première position axiale par l'actionnement de la manivelle (3),
- au moins une excroissance radiale de bobine (24) et une excroissance radiale d'arbre (22), agencées pour s'engager latéralement l'une contre l'autre en solidarisant ainsi la bobine (6) en rotation sur l'arbre support de bobine (7) lorsque celle-ci est en première position axiale tout en autorisant sa translation axiale, et agencées pour se dégager l'une de l'autre et libérer ainsi la rotation de la bobine (6) sur l'arbre support de bobine (7) lorsque celle-ci est en seconde position axiale,
caractérisé en ce que :
- l'une au moins des excroissances radiales de bobine (24) ou d'arbre (22) est escamotable radialement à l'encontre de moyens élastiques de rappel (29, 129, 229),
- des rampes obliques (23, 25) sont prévues sur les faces frontales respectives en regard l'une de l'autre des excroissances radiales d'arbre (22) et/ou de bobine (24),
de sorte que, lors du déplacement relatif de la bobine (6) sur l'arbre support de bobine (7) depuis la seconde position axiale vers la première position axiale, les excroissances radiales (22, 24) ne s'opposent pas au déplacement axial de la bobine (6) et s'escamotent radialement si nécessaire pour revenir ensuite s'engager latéralement les unes contre les autres en première position axiale de bobine.

2. Moulinet selon la revendication 1, caractérisé en ce qu'il comprend :
- une première (16) et une seconde (17) gorges annulaires ménagées au voisinage de l'extrémité antérieure (15) de l'arbre support de bobine (7) et écartées l'une de l'autre selon un décalage axial,
- un élément élastique de retenue (18) solidaire de la bobine (6) et venant s'engager dans l'une ou l'autre des gorges annulaires (16, 17), pour maintenir la bobine (6) sur l'arbre support de bobine (7) selon une première position axiale lorsque l'élément élastique de retenue (18) est engagé dans la première gorge annulaire (16), et pour maintenir la bobine (6) sur l'arbre support de bobine (7) selon la seconde position axiale décalée axialement de la première position axiale lorsque l'élément élastique de retenue (18) est engagé dans la seconde gorge annulaire (17).

3. Moulinet selon la revendication 2, caractérisé en ce que :
- la seconde gorge annulaire (17) comporte une rampe (117) en direction de la première gorge annulaire (16), pour autoriser la translation de la bobine (6) en direction de la première gorge annulaire (16) sous l'action d'un effort axial sollicitant la bobine (6) à l'encontre de la force de retenue produite par l'élément élastique de retenue (18),
- l'arbre support de bobine (7) est entraîné selon un mouvement de translation axiale alternative dans le boîtier de moulinet (1) par la rotation de la manivelle (3),
- une butée fixe (21) en translation axiale par rapport au boîtier de moulinet (1) autorise le déplacement axial de la bobine (6) par rapport au boîtier de moulinet (1) selon toute la course axiale de l'arbre support de bobine (7) lorsque celle-ci est en première position axiale, mais s'oppose au déplacement axial de la bobine (6) par rapport au boîtier de moulinet (1) sur une portion postérieure de la course axiale de l'arbre support de bobine (7) lorsque la bobine (6) est en seconde position axiale, de sorte que dans ladite portion postérieure de course axiale de l'arbre support de bobine (7) la bobine (6) est déplacée sur l'arbre support de bobine (7) jusqu'à sa première position axiale.

4. Moulinet selon la revendication 3, caractérisé en ce que :
- la première gorge annulaire (16) qui assure le maintien de la bobine (6) en première position axiale est proche de l'extrémité antérieure (15) de l'arbre support de bobine (7), tandis que la seconde gorge annulaire (17) est plus éloignée de l'extrémité antérieure (15) de l'arbre support de bobine (7),
- une partie antérieure (21) du tambour (11) de récupération de fil forme butée limitant la course de translation de la bobine (6) vers l'arrière,
- lors du mouvement de recul de l'arbre support de bobine (7), la bobine est retenue par la partie antérieure (21) de tambour (11), l'élément élastique de retenue (18) échappe de la seconde gorge annulaire (17) et s'insère dans la première gorge annulaire (16) pour retenir la bobine (6) en première position axiale sur l'arbre support de bobine (7).

5. Moulinet selon l'une quelconque des revendications 1 à 4, caractérisé en ce que les excroissances radiales de bobine (24, 124, 224) sont escamotables radialement vers l'extérieur à l'encontre des moyens élastiques de rappel (29, 129, 229).

6. Moulinet selon la revendication 5, caractérisée en ce que l'arbre support de bobine (7) porte un tronçon à cannelures longitudinales (22) constituant les excroissances radiales d'arbre.

7. Moulinet selon la revendication 6, caractérisé en ce que le tronçon à cannelures longitudinales (22) est un manchon chassé en force sur l'arbre support de bobine (7).

8. Moulinet selon l'une des revendications 6 ou 7, caractérisé en ce que la bobine (6) comprend une paroi postérieure (20) rapportée munie d'un passage axial (26) dans lequel dépassent les excroissances radiales de bobine (24, 124, 224), et le tronçon à cannelures longitudinales (22) de l'arbre support de bobine (7) est conformé pour tourillonner librement dans le passage axial (26) tout en venant engrener sur les excroissances radiales de bobine (24, 124, 224) lorsqu'elles ne sont pas escamotées, la paroi postérieure (20) étant suivie vers l'avant d'un espace (27) dépourvu d'excroissances radiales de bobine et dans lequel le tronçon à cannelures longitudinales (22) peut tourner librement.

9. Moulinet selon l'une quelconque des revendications 5 à 8, caractérisé en ce que les excroissances radiales de bobine (24, 124, 224) sont des ergots de coulisseaux (28, 128, 228) montés coulissant radialement et guidés en translation radiale dans la bobine (6) en étant sollicités vers le centre par des moyens élastiques de rappel (29, 129, 229).

10. Moulinet selon l'une quelconque des revendications 5 à 8, caractérisé en ce que les excroissances radiales de bobine sont des extrémités de leviers montés pivotants, comportant une extrémité en forme d'ergot dépassant radialement vers l'arbre support de bobine (7), et sollicités par des moyens élastiques de rappel.
